Europäisches Patentamt

European Patent Office

Office européen des brevets

(19)

(11) **EP 0 929 975 B1**

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(21) Anmeldenummer: **97941801.9**

(22) Anmeldetag: **21.08.1997**

(51) Int Cl.⁷: **H04N 7/28**, H04N 7/34, H04N 7/26

(86) Internationale Anmeldenummer:
**PCT/DE97/01806**

(87) Internationale Veröffentlichungsnummer:
**WO 98/015125 (09.04.1998 Gazette 1998/14)**

(54) **VERFAHREN UND ANORDNUNG ZUR VEKTORQUANTISIERUNG UND ZUR INVERSEN VEKTORQUANTISIERUNG EINES DIGITALISIERTEN BILDES**

METHOD AND ARRANGEMENT FOR VECTOR QUANTIZATION AND FOR REVERSE VECTOR QUANTIZATION OF A DIGITIZED IMAGE

PROCEDE ET DISPOSITIF POUR LA QUANTIFICATION VECTORIELLE ET POUR LA QUANTIFICATION VECTORIELLE INVERSE D'UNE IMAGE NUMERISEE

(84) Benannte Vertragsstaaten:
**DE FR GB NL SE**

(30) Priorität: **01.10.1996 DE 19640582**

(43) Veröffentlichungstag der Anmeldung:
**21.07.1999 Patentblatt 1999/29**

(73) Patentinhaber: **Infineon Technologies AG**
**81669 München (DE)**

(72) Erfinder: **PANIS, Stathis**
**D-80803 München (DE)**

(74) Vertreter: **Reinhard - Skuhra - Weise & Partner**
**Postfach 44 01 51**
**80750 München (DE)**

(56) Entgegenhaltungen:
• **ZENG B ET AL: "INTERPOLATIVE BTC IMAGE CODING WITH VECTOR QUANTIZATION" IEEE TRANSACTIONS ON COMMUNICATIONS, Bd. 41, Nr. 10, 1.Oktober 1993, Seiten 1436-1438, XP000398019**
• **HUANG H -C ET AL: "REAL-TIME SOFTWARE-BASED MOVING PICTURE CODING (SBMPC) SYSTEM" SIGNAL PROCESSING. IMAGE COMMUNICATION, Bd. 6, Nr. 2, 1.Mai 1994, Seiten 173-187, XP000450548**
• **ZENG W ET AL: "DIRECTIONAL SPATIAL INTERPOLATION FOR DCT-BASED LOW BIT RATE CODING" PROCEEDINGS OF THE INTERNATIONAL CONFERENCE ON ACOUSTICS, SPEECH, AND SIGNAL PROCESSING (ICASSP), Bd. 4, 7. - 10.Mai 1996, INSTITUTE OF ELECTRICAL AND ELECTRONICS ENGINEERS, Seiten 2100-2103, XP002050992**
• **CONSTANTINESCU C ET AL: "IMPROVED TECHNIQUES FOR SINGLE-PASS ADAPTIVE VECTOR QUANTIZATION" PROCEEDINGS OF THE IEEE, Bd. 82, Nr. 6, 1.Juni 1994, Seiten 933-939, XP000438342**
• **POGGI G: "APPLICATIONS OF THE KOHONEN ALGORITHM IN VECTOR QUANTIZATION" EUROPEAN TRANSACTIONS ON TELECOMMUNICATIONS AND RELATED TECHNOLOGIES, Bd. 6, Nr. 2, 1.März 1995, Seiten 191-202, XP000506827**
• **PRATT: "DIGITAL SPATIAL PROCESSING IMAGE CODING" 1978 , DIGITAL IMAGE PROCESSING, PAGE(S) 662 - 666, 707 , PRATT W K XP002028501 siehe Absatz 23.1.2**

**Beschreibung**

Die Erfindung betrifft die Vektorquantisierung und inverse Vektorquantisierung eines digitalisierten Bildes.

Vektorquantisierung und die damit verbundene inverse Vektorquantisierung wird zur Codierung und Kompression digitalisierter Bilder eingesetzt. Sie basiert darauf, daß das Bild in zweidimensionale Bildbereiche aufgeteilt wird und ein Codewort ermittelt wird, welches den jeweils zu quantisierenden Bildbereich bezüglich eines vorgebbaren Ähnlichkeitsmaßes am besten näherungsweise beschreibt. Codeworte sind Vektoren, die zuvor als eine Menge von Standardvektoren in einem sog. Codebuch abgespeichert wurden. Aus dem Codebuch werden Vektoren auf Vektoren, die die Bildinformation des zu quantisierenden Bildbereichs beschreiben, näherungsweise abgebildet. Aus dieser Vorgehensweise resultiert auch der Begriff der Vektorquantisierung.

Unter einem Bildbereich ist im Rahmen dieses Dokuments eine Menge von Bildpunkten des jeweils zu quantisierenden digitalen Bildes zu verstehen. Die Bildbereiche können eine beliebige Form und Größe aufweisen.

Als Quantisierungsvektor wird im weiteren ein Vektor bezeichnet, der in einem Codebuch enthalten ist und der als Vektorkomponenten Werte von Bildinformation enthält, die quantisiert werden soll.

Als Bildvektor wird im weiteren ein Vektor bezeichnet, der jeweils einen Bildbereich beschreibt, und der als Vektorkomponenten die zu quantisierende Bildinformation des jeweiligen Bildbereichs enthält.

Unter Bildinformation ist beispielsweise Luminanzinformation, ein dem jeweiligen Bildpunkt zugeordneter Helligkeitswert, Chrominanzinformation, ein dem jeweiligen Bildpunkt zugeordneter Farbwert oder auch beispielsweise Spektralkoeffizienten, z. B. DCT-Transformationskoeffizienten (Diskrete Cosinus-Transformation) beschreiben.

Es ist bekannt, ein zu codierendes digitalisiertes Bild in zweidimensionale Bildbereiche rechteckiger Form zu gruppieren [1]. Dabei werden die Bildpunkte des Bildes in sog. Bildblöcke gruppiert.

Den Bildpunkten des Bildblocks werden üblicherweise Luminanzwerte und/oder Chrominanzwerte zugeordnet. Die Luminanzwerte und/oder die Chrominanzwerte der jeweiligen Bildpunkte bilden jeweils als eine Komponente des Bildvektors den zu quantisierenden Bildvektor. Der zu quantisierende Bildvektor wird bei dem bekannten Verfahren mit der Menge von Quantisierungsvektoren des Codesbuchs verglichen, die üblicherweise zuvor gespeichert wurden und beispielsweise in einem Nur-Lese-Speicher (Read-Only-Memory, ROM) abgelegt wurden. Derjenige Quantisierungsvektor des Codebuchs wird ausgewählt, der dem Bildvektor bezüglich eines vorgebbaren Ähnlichkeitsmaßes am ähnlichsten ist. Als Ähnlichkeitsmaß wird üblicherweise die Summe der quadratischen Differenz der einzelnen Komponenten des Bildvektors und des Quantisierungsvektors verwendet. Ist der "beste" Quantisierungsvektor ermittlt worden, so wird üblicherweise ein Index des Codebuchszur Kennzeichnung des Quantisierungsvektors ermittelt. Der Index wird im weiteren als Eintrag des Codebuchs bezeichnet. Mit dem Eintrag wird der jeweilige Quantisierungsvektor eindeutig gekennzeichnet. Es ist jedoch ebenso möglich, als Eintrag des Codebuchs den Quantisierungsvektor selbst zu verwenden.

Üblicherweise wird der Eintrag des Codebuchs codiert und an einen Empfänger übertragen.

Zur Rekonstruktion des digitalisierten Bildes wird der empfangene Eintrag nach der Decodierung in einem auch bei dem Empfänger vorhandenen Codebuch auf den Quantisierungsvektor abgebildet und es wird der Quantisierungsvektor als approximierte Bildinformation zur Rekonstruktion des digitalisierten Bildes verwendet.

Durch diese Vorgehensweise wird die benötigte Übertragungsrate zur Übertragung der Bildinformation des digitalisierten Bildes erheblich reduziert, da jeweils nur der Index des Codebuchs übertragen werden muß und nicht der gesamte Bildvektor des jeweiligen Bildblockes.

Aus dem Dokument [2] ist es ferner bekannt, Korrelationen zwischen Bildblöcken auszunutzen, um somit die benötigte Übertragungsrate weiter zu reduzieren. Das in dem Dokument [1] beschriebene Verfahren wird als endliche Zustands-Vektorquantisierung (Finite State Vector Quantisation, FSVQ) bezeichnet. Der jeweilige Zustand des aktuellen Eingabevektors ist durch den jeweils direkt vorausgegangenen codierten, d. h. quantisierten Bildvektor bzw. Quantisierungsvektor definiert. Die endliche Zustandsvektorquantisierung ist eine Klasse von Vektorquantisierungen, welche digitale Speicher verwenden [2].

In dem Dokument [1] sind ferner zwei Methoden der endlichen Zustands-Vektorquantisierung (FSVQ) beschrieben: Die sog. Seiten-Ähnlichkeits-Vektorquantisierung (Side-Match Vector Quantisation, SMVQ) und die sog. Überlappungs-Ähnlichkeits-Vektorquantisierung (Overlap-Match Vector Quantisation, OMVQ).

Beide Methoden haben zum Ziel, das Problem entstehender Blockartefakte bei der Codierung von Bildblöcken zu lösen.

Bei der SMVQ wird vorausgesetzt, daß die Verteilung der Luminanzinformation der Zeilen und Spalten des zu quantisierenden Bildes mit einem Markov-Prozeß erster Ordnung beschrieben werden können, d. h. daß die den Bildpunkten zugeordneten Luminanzwerte benachbarter Zeilen und Spalten in hohem Maße miteinander korreliert sind. Unter dieser Voraussetzung enthalten jeweils Bildpunkte am Rand der Bildblöcke eines zu codierenden Bildblocks einen Großteil der Bildinformation zuvor codierter, benachbarter Bildblöcke. Es wird ein sog. Zustandscodebuch gebildet, welches Codeworte enthält, die Randbildpunkte enthalten, die verglichen mit zuvor schon codierten Randbildpunkten große Ähnlichkeit aufweisen. Das Zustandscodebuch wird zur Auswahl des ähnlichsten Quantisierungsvektors des Codebuchs für den jeweiligen Bildblock verwendet. Ein Vorteil der SMVQ bzw. des FSVQ ist darin zu sehen, daß selbst für den Fall, daß durch den Quantisierungsvektor der Bildvektor nicht optimal beschrieben wird, der entstehende Fehler oftmals für einen Betrachter des rekonstruierten Bildes aufgrund der Korrelation benachbarter Bildblöcke nicht übermäßig sichtbar wird.

Bei dem OMVQ-Verfahren werden zu quantisierende Bildblöcke dadurch gebildet, daß sich Zeilen bzw. Spalten von benachbarten Bildblöcken teilweise überlappen. Zur Ermittlung des Quantisierungsvektors für den jeweiligen Bildblock wird in der gleichen Weise vorgegangen wie bei dem FSVQ-Verfahren bzw. bei dem SMVQ-Verfahren. Bei der Rekonstruktion des Bildes wird der jeweilige Bildblock dadurch wieder auf Originalgröße gebracht, daß die überlappende Zeile bzw. Spalte zwischen den Bildblöcken jeweils mit einer Zeile bzw. Spalte von Bildpunkten ergänzt wird, denen der Durchschnitt der Helligkeitswerte bzw. Farbwerte der überlappenden Bildpunkte zugewiesen wird.

Die bekannten Verfahren weisen einige erhebliche Nachteile auf. Zum einen sind die Verfahren sehr komplex, was zu einem erheblichen Rechenzeitbedarf bei der Durchführung der Verfahren durch einen Rechner führt.

Als Rechner sind im Rahmen des Dokumentes sowohl eine elektronische Datenverarbeitung als auch eine beliebige Anordnung mit einem Prozessor, mit dem digitale Daten verarbeitet werden können, zu verstehen.

Ferner setzen die bekannten Verfahren einen Markov-Prozeß erster Ordnung voraus, d. h. eine hohe Korrelation benachbarter Bildpunkte des digitalisierten Bildes. Auch ist bei den Verfahren eine zusätzliche Angabe des Zustands, d. h. eine zusätzliche Angabe und Berücksichtigung von Information zuvor codierter Bildblöcke erforderlich, was wiederum zu einer Erhöhung der erforderlichen Übertragungsrate führt.

Grundlagen der Vektorquantisierung sind in [3] beschrieben. weitere Verfahren sind aus [4] und [5] bekannt.

Somit liegt der Erfindung das Problem zugrunde, ein Verfahren zur Vektorquantisierung und zur inversen Vektorquantisierung eines digitalisierten Bildes anzugeben, bei dem die Nachteile der bekannten Verfahren vermieden werden.

Das Problem wird durch das Verfahren gemäß Patentanspruch 1 und durch die Anordnung gemäß Patentanspruch 8 gelöst.

Das digitalisierte Bild wird in mindestens einen zu quantisierenden Bildbereich und in mindestens einen nicht zu quantisierenden Bildbereich unterteilt. Die zu quantisierenden Bildbereiche werden durch Abbildung der Bildinformation der Bildbereiche auf mindestens einen Eintrag in einem Codebuch abgebildet. Diese Abbildung wird auch als Vektorquantisierung bezeichnet. Der jeweilige Eintrag des Codebuchs wird dem Bildbereich zugeordnet und bei der Rekonstruktion des digitalisierten Bildes wird der Eintrag auf die in dem Codebuch dem Eintrag zugeordnete approximierte Bildinformation abgebildet. Unter Verwendung der approximierten Bildinformation wird der jeweilige Bildbereich rekonstruiert. Bildpunkte, d. h. Bereiche des digitalisierten Bildes, die nicht quantisiert wurden, werden durch Interpolation und/oder durch Extrapolation von Bildinformation mindestens eines quantisierten Bildbereichs rekonstruiert.

Auf diese sehr einfache Weise ist es möglich, nicht das gesamte digitalisierte Bild quantisieren zu müssen, sondern nur einen Teilbereich des digitalisierten Bildes.

Es ist es gegenüber den bekannten Verfahren nicht erforderlich, daß der Verlauf der Bildinformation durch einen Markov-Prozeß erster Ordnung beschrieben werden kann.

Das Verfahren ist gegenüber den bekannten Verfahren erheblich vereinfacht in der Durchführung. Dies führt dazu, daß eine erhebliche Reduktion des erforderlichen Bedarfs an Rechenkapazität zur Quantisierung und zur inversen Quantisierung und somit zur gesamten Codierung bzw. Decodierung des digitalisierten Bildes erreicht wird.

Vorteilhafte Weiterbildungen der Erfindung ergeben sich aus den abhängigen Ansprüchen.

Eine weitere Reduktion eines bei der Übertragung des Bildes benötigten Bandbreitenbedarfs wird dadurch erreicht, daß die Größe der zu quantisierenden Bildbereiche adaptiv ausgestaltet ist, d. h. daß beispielsweise abhängig von der Semantik des digitalisierten Bildes Bildbereiche unterschiedlicher Größe als zu quantisierende Bildbereiche gewählt werden. Auf diese Weise wird beispielsweise bei sehr gleichmäßigen Bildbereichen mit hoher Redundanz innerhalb der Bildinformation schon eine geringe Größe des zu quantisierenden Bildbereichs ausreichen, um eine gute Qualität des konstruierten Bildes zu gewährleisten. Andererseits ist beispielsweise bei Bereichen des Bildes, die sehr detaillierte Strukturen aufweisen, eine Quantisierung größerer Bildbereiche erforderlich, um diese tatsächlich gut nachbilden zu können. Werden Bildbereiche geringer Größe quantisiert, so wird über eine größere Anzahl von Bildpunkten nicht quantisierter Bildbereiche interpoliert und umgekehrt wird bei größeren zu quantisierenden Bildbereichen nur über eine geringe Anzahl von nicht quantisierten Bildpunkten interpoliert bzw. extrapoliert.

Damit wird eine optimierte Anpassung der erforderlichen Übertragungsrate an die Semantik des Bildes möglich.

Weiterhin ist es vorteilhaft, Vorwissen über das Bild, beispielsweise Vorwissen über sehr gleichmäßige Bildbereiche bezüglich der Bildinformation und sehr detailliert ausgestaltete Bildbereiche bei der Auswahl der Größe des Bildbereichs, das jeweils quantisiert werden soll, zu berücksichtigen. Auch durch diese Weiterbildung wird eine Verbesserung der benötigten Übertragungsrate erreicht.

Ein Ausführungsbeispiel der Erfindung ist in den Figuren dargestellt und wird im weiteren näher erläutert.

Es zeigen

Fig. 1     eine Skizze eines digitalisierten Bildes mit Bildpunkten und zu quantisierenden Bildbereichen;

Fig. 2     ein quantisierter Bildbereich und Bildpunkte am Rand eines Bildes, die durch Extrapolation von Bildinformation des invers quantisierten Bildbereichs rekonstruiert werden;

Fig. 3     ein Ablaufdiagramm, in dem die einzelnen Verfahrensschritte des erfindungsgemäßen Verfahrens dargestellt sind;

Fig. 4     eine Skizze, in der eine Weiterbildung des Verfahrens mit zu quantisierenden Bildbereichen unterschiedlicher Größe dargestellt ist;

Fig. 5     eine Rechneranordnung, mit der das Verfahren üblicherweise durchgeführt wird.

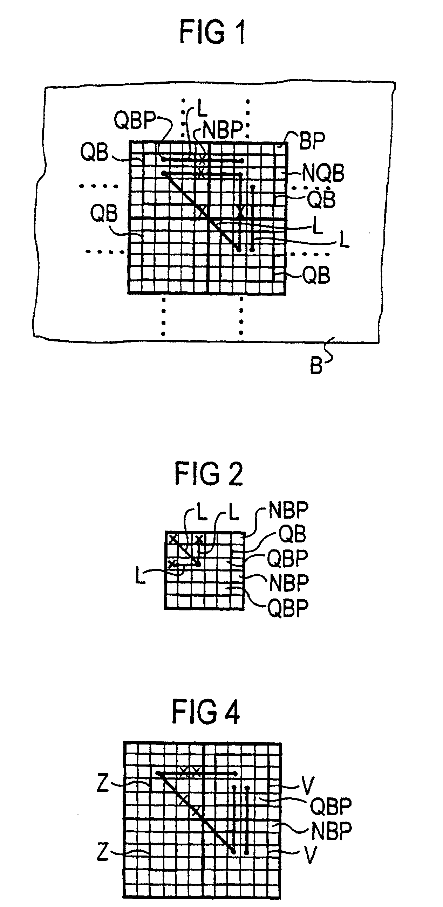

In Fig. 1 ist ein digitalisiertes Bild B dargestellt. Das digitalisierte Bild B weist eine beliebige Anzahl von Bildpunkten BP auf, denen üblicherweise Luminanzwerte (Helligkeitswerte) und/oder Chrominanzwerte (Farbwerte) eindeutig zugeordnet werden.

Es können den Bildpunkten jedoch auch bei Bearbeitung des digitalisierten Bildes B im Spektralbereich beispielsweise Spektralkoeffizienten, z. B. sog. DCT-Koeffizienten (Diskrete Cosinus-Transformation) zugeordnet werden.

Die den Bildpunkten zugeordnete Werte werden als Bildinformation bezeichnet. Mit der Bildinformation wird allgemein die Semantik des Bildes B beschrieben.

Durch die gepunkteten Linien wird in Fig. 1 angedeutet, daß die Anzahl der Bildpunkte BP innerhalb des Bildes B beliebig ist.

Ferner sind in Fig. 1 zu quantisierende Bildbereiche QB dargestellt. Ein zu quantisierender Bildpunkt QBP, der sich innerhalb eines zu quantisierenden Bildbereichs B befindet, wird bei der im weiteren beschriebenen Abbildung auf mindestens einen in einem sog. Codebuch gespeicherten Quantisierungsvektor berücksichtigt. Ein nicht zu quantisierender Bildpunkt NBP, der sich nicht in einem zu quantisierenden Bildbereich QB befindet, wird bei der Abbildung auf den Quantisierungsvektor nicht berücksichtigt.

Zur einfacheren Darstellung des Verfahrens weisen die zu quantisierenden Bildbereiche QB in Figur 1 eine quadratische Form auf.

Dies ist jedoch in keinster Weise notwendig. Die Form der zu quantisierenden Bildbereiche QB ist allgemein beliebig. Ebenso ist die Größe der zu quantisierenden Bildbereiche QB beliebig vorgebbar.

Es ist lediglich erforderlich, daß die Zuordnung der Bildinformation zu den Bildpunkten, die jeweils den Bildvektor bilden, in einer Weise eindeutig ist, daß die Zuordnung der einzelnen Komponenten innerhalb des Codebuchs, also innerhalb der Quantisierungsvektoren in der Reihenfolge gleich ist.

In Fig. 2 ist ein zu quantisierender Bildbereich QB und Bildpunkte BP, die sich nicht in dem zu quantisierenden Bildbereich QB befinden, dargestellt. Durch durchgezogene Verbindungslinien L wird symbolisch angedeutet, daß sich der Wert der Bildinformation für den jeweiligen Bildpunkt NBP, der sich nicht in dem zu quantisierenden Bildbereich QB befindet, durch Extrapolation von Bildinformation entlang der jeweiligen durchgezogenen Linie L oder auch durch Extrapolation von Bildinformation benachbarter Bildpunkte der jeweiligen Linie L ergibt. Die Extrapolation eignet sich besonders für einen zu quantisierenden Bildbereich QB am Rand eines Bildes, da in einem Randbereich eines Bildes kein weiterer zu quantisierender Bildbereich QB vorhanden ist, der Information enthält, die durch eine Interpolation zwischen den entsprechenden Bildpunkten der zu quantisierenden Bildbereiche QB berücksichtigt werden könnte. In diesem Fall ist es sinnvoll, für einen sich am Rand des Bildes befindenden zu quantisierenden Bildbereich QB eine Extrapolation der jeweiligen Bildinformation durchzuführen.

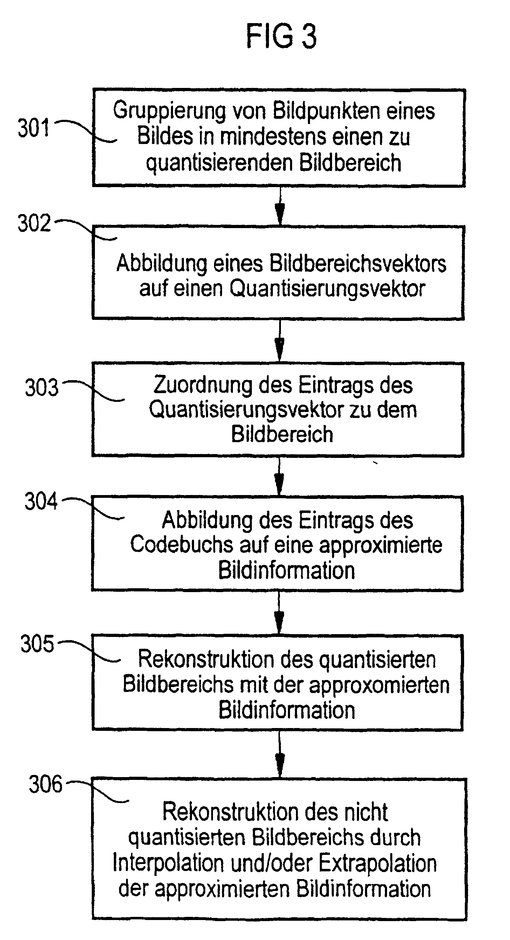

In Fig. 3 ist in Form eines Ablaufdiagramms das Verfahren in seinen einzelnen Verfahrensschritten dargestellt.

In einem ersten Schritt 301 werden die Bildpunkte BP des Bildes B in mindestens einen zu quantisierenden Bildbereich QB gruppiert, wobei andere Bildpunkte BP des Bildes BP nicht in die zu quantisierenden Bildbereiche QB gruppiert werden.

Jeweils die Bildinformation, eines Bildpunktes QBP, der in dem zu quantisierenden Bildbereich QB liegt, bildet eine Komponente eines Bildbereichsvektors. Die Reihenfolge der einzelnen Bildpunkte bzw. der den Bildpunkten QBP zugeordneten Bildinformation innerhalb des Bildbereichsvektors ist allgemein beliebig, muß jedoch in der Reihenfolge konsistent sein mit den Vektorkomponenten von Quantisierungsvektoren, die in dem Codebuch enthalten sind.

Der Bildbereichsvektor wird auf mindestens einen Quantisierungsvektor in dem Codebuch abgebildet. Dies erfolgt beispielsweise durch Vergleich jeweils des Bildbereichsvektors mit mindestens einem Teil der Quantisierungsvektoren, indem z. B. eine Summe über die quadratische Differenz der einzelnen Komponenten des Bildbereichsvektors und des Quantisierungsvektors gebildet wird. Derjenige Quantisierungsvektor wird ausgewählt, der bezüglich des allgemein frei vorgebbaren Ähnlichkeitsmaßes dem Bildbereichsvektor am ähnlichsten ist.

Üblicherweise ist dem Quantisierungsvektor in dem Codebuch ein Index zugeordnet, der den jeweiligen Quantisierungsvektor eindeutig kennzeichnet. Der Index wird im weiteren als Eintrag des Codebuchs bezeichnet. Der Eintrag des Codebuchs kann jedoch auch der Quantisierungsvektor selbst sein.

Es wird, wie im vorigen beschrieben wurde, in einem zweiten Schritt 302 die Bildinformation in Form des Bildbereichsvektors auf den Eintrag in dem Codebuch abgebildet.

Der jeweilige Eintrag des Codebuchs wird in einem weiteren Schritt 303 dem jeweils zu quantisierenden Bildbereich QB, dessen Bildbereichsvektor auf den Quantisierungsvektor abgebildet wurde, eindeutig zugeordnet.

Bei einer inversen Vektorquantisierung des Bildes B wird der Eintrag des Codebuchs auf eine approximierte Bildinformation, den Quantisierungsvektor abgebildet 304. Unter der approximierten Bildinformation ist der durch den Eintrag des Codebuchs gekennzeichnete Quantisierungsvektor zu verstehen, der bei der Rekonstruktion des Bildes B für den Bildbereich verwendet wird.

Unter Verwendung des Quantisierungsvektors wird der zu quantisierende Bildbereich QB rekonstruiert 305. Dies erfolgt durch Zuordnung der jeweiligen Bildinformation innerhalb des Quantisierungsvektors zu dem jeweils eindeutig bezeichneten Bildpunkt QBP innerhalb des zu quantisierenden Bildbereichs QB.

Bei der inversen Quantisierung werden in einem letzten Schritt 306 Bildpunkte NBP, die sich nicht in einem zu quantisierenden Bildbereich QB befinden, dadurch rekonstruiert, daß Bildpunkte, die zwischen zwei zu quantisierenden Bildbereichen QB liegen, durch Interpolation von Bildinformation der Bildpunkte, die den Bildpunkten NBP der nicht zu quantisierenden Bildbereiche NQB benachbart sind, interpoliert werden.

Bildpunkte NBP, die sich nicht in einem zu quantisierenden Bildbereich QB befinden und sich auch nicht zwischen mehreren zu quantisierenden Bildbereichen QB befinden, z. B. am Rand des Bildes B liegen, werden vorteilhafter Weise durch Extrapolation der Bildinformation des angrenzenden zu quantisierenden Bildbereichs QB und der Bildinformation der in dem zu quantisierenden Bildbereich QB enthaltenen Bildpunkten QBP ermittelt.

Zur Interpolation der Bildinformation, beispielsweise der Luminanzwerte oder Chrominanzwerte der einzelnen Bildpunkte BP und somit zur Ermittlung der Bildinformation für die Bildpunkte NBP, die sich nicht in einem zu quantisierenden Bereich QB befinden, kann prinzipiell jede beliebige Interpolationsfunktion, also jede beliebige Funktion verwendet werden. Es hat sich folgende eindimensionale Funktion als vorteilhaft und ausreichend herausgestellt:

$$f(x_0) = \frac{14x_{-1} + 10x_{-2} + 4x_{-3} + 12x_1 + 6x_2 + (-2)x_3}{s} \tag{1}.$$

Mit $f(x_0)$ wird die zu ermittelnde Bildinformation des jeweiligen Bildpunkts NBP bezeichnet. Mit $x_{-1}$, $x_{-2}$, $x_{-3}$, $x_1$, $x_2$, $x_3$ wird die Bildinformation der Bildpunkte bezeichnet, die entlang einer vorgebbaren Richtung benachbart zu dem Bildpunkt NBP liegen, für den der jeweilige Wert der Bildinformation ermittelt werden soll. Es ist in einer Variante des Verfahrens vorgesehen, daß unter Verwendung der Funktion nicht nur lediglich ein Wert der Bildinformation eines Bildpunktes NBP ermittelt wird, sondern daß durch die Interpolation eine beliebige Anzahl von Bildpunkten NBP, die sich entlang der vorgebbaren Richtung nicht in einem zu quantisierenden Bildbereich QB befinden, gleichzeitig ermittelt wird.

Dieselben Regelungen der Nomenklatur gelten auch für eine vorteilhaft verwendbare Extrapolationsfunktion, die beispielsweise folgende Struktur aufweist:

$$f(x_0) = \frac{14x_{-1} + 10x_{-2}}{s} \tag{2}.$$

Mit s wird jeweils die Summe der Werte der Bildinformation der berücksichtigten Bildpunkte BP bezeichnet, beispielsweise die Summe aller Helligkeitswerte der Bildpunkte BP, die bei der Interpolation bzw. bei der Extrapolation berücksichtigt werden.

In einer Weiterbildung des Verfahrens ist es vorgesehen, daß innerhalb eines Bildes B die Größe der Bildbereiche QB adaptiv ausgewählt wird, beispielsweise abhängig von der Semantik des Bildes B.

Unter Semantik ist in diesem Zusammenhang beispielsweise die Struktur des Bildes B zu verstehen, z. B. ob in einem Bereich des Bildes B sehr viele Änderungen der Bildinformation, z. B. der Luminanzwerte vorhanden sind, also ob das Bild B in dem Bereich erhebliche Detailstrukturen aufweist, oder ob der Bildbereich eine sehr gleichmäßige Struktur aufweist, beispielsweise eine größere Fläche mit fast einheitlichen Luminanzwerten oder auch mit fast einheitlichen Chrominanzwerten.

Zur einfacheren Darstellbarkeit werden im weiteren lediglich Bildblöcke der Größe 2x2 Bildpunkte bzw. 4x4 Bildpunkte als zu quantisierende Bildbereiche erläutert.

Allgemein ist das im weiteren beschriebene Prinzip jedoch auf eine beliebige Anzahl von Bildpunkten, d. h. auf eine beliebige Größe der zu quantisierenden Bildbereiche QB anwendbar.

Als Maß t für die Semantik des Bildes B kann beispielsweise für den Fall, daß die Bildinformation durch die Luminanzwerte gegeben sind, die Varianz der Luminanzwerte verwendet werden. Die Varianz ergibt sich beispielsweise aus dem Quotienten der Differenz der maximalen Luminanzwerte max und der minimalen Luminanzwerte min sowie der Summe der maximalen Luminanzwerte max und der minimalen Luminanzwerte min der bei der Interpolation bzw. Extrapolation berücksichtigten Bildpunkte:

$$t = \frac{\text{max - min}}{\text{max + min}} \tag{3}.$$

Ist das Maß t kleiner als eine vorgebbare Schranke, so ist es beispielsweise ausreichend, daß lediglich ein 2x2 Bildblock Z quantisiert wird und der Rest beispiesweise eines zu codierenden Bildblocks von 8X8 Bildpunkten BP kann bei der Rekonstruktion interpoliert werden. Ist jedoch der Wert größer als die Schranke, so ist es beispielsweise erforderlich, einen 4x4-Bildblock V zu quantisieren, um eine in dem Bildblock enthaltene Detailstruktur besser nachbilden zu können.

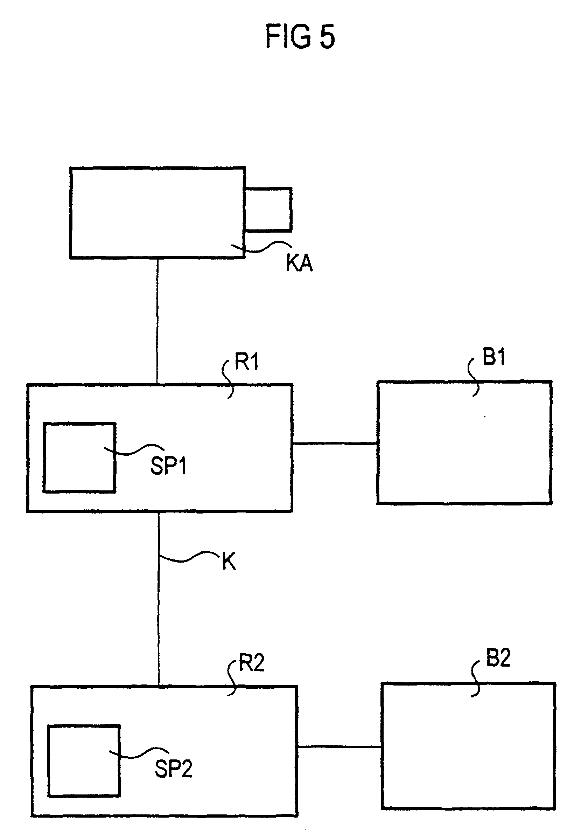

Diese Situation der Interpolation zwischen den zu quantisierenden Bildblöcken QB mit zu quantisierenden Bildblöcken QB unterschiedlicher Größe ist in Fig. 4 dargestellt. Für diesen Fall ist natürlich auch eine entsprechend der unterschiedlichen Größen und Formen verwendeter zu quantisierender Bildbereiche Anzahl von Codebüchern erforderlich, um die entsprechende Vektorquantisierung und inverse Vektorquantisierung durchzuführen.

Ferner ist es in einer Weiterbildung des Verfahrens vorgesehen, bei dem Verfahren Vorwissen über die Semantik des Bildes zu Beginn des Verfahrens zu berücksichtigen. Ist es beispielsweise vor der Quantisierung des Bildes bekannt, daß ein größerer Bereich des Bildes B eine einheitliche Struktur aufweist, und lediglich ein kleiner Teil des Bildes eine sehr hohe Detailstruktur aufweist, so ist es vorteilhaft, bei der Quantisierung den Teil mit der erhöhten Detailstruktur genauer, d. h. mit einem zu quantisierenden Bildbereich QB zu quantisieren und beispielsweise den restlichen Teil des Bildes lediglich durch Extrapolation von Randpunkten des zu quantisierenden Bildbereichs QB bei der inversen Quantisierung zu ermitteln.

Unabhängig von den im vorigen beschriebenen Verfahren zur Vektorquantisierung kann folgendes Verfahren zur Vektorquantisierung eingesetzt werden kann.

Bei diesem Verfahren wird keine Interpolation bzw. Extrapolation der Bildinformation vorgenommen, sondern für einen zu quantisierenden Bildbereich QB, der kleiner ist als beispielsweise das gesamte Bild B werden Bildpunkte NBP, die sich nicht in einem zu quantisierenden Bildbereich QB befinden, dadurch rekonstruiert, daß beispielsweise ein Durchschnittswert einer beliebigen Anzahl, beispielsweise direkt benachbarter Bildpunkte des zu quantisierenden Bildbereichs QB ermittelt wird und dieser Durchschnittswert dem jeweiligen Bildpunkt NBP zugeordnet wird.

Auch durch diese Vorgehensweise wird eine erhebliche Reduktion des Umfangs des benötigten Codebuchs erreicht, da wiederum der zu quantisierende Bildbereich QB erheblich geringer ist als bei bekannten Verfahren, bei denen alle Bildpunkte des Bildes B in Bildblöcken quantisiert werden.

Folgende Betrachtung kann die Vorteile der Verfahren verdeutlichen.

Für einen Bildblock der Größe 6x6 Bildblöcke ist beispielsweise die Größe des Codebuchs $256^{36}$ Einträge groß. Für einen Bildblock der Größe 4x4 Bildpunkte verringert sich die Anzahl der Einträge in dem Codebuch auf $256^{16}$. Aus diesem Grunde wird dadurch, daß durch die erfindungsgemäßen Verfahren und der damit verbundenen Interpolation die Größe der zu quantisierenden Bildbereiche QB erheblich reduziert wird, die Codierung erheblich schneller oder alternativ erheblich genauer durchführbar.

Ferner wird durch diese Vorgehensweise der Interpolation eine erhebliche Reduktion entstehender Blockartefakte bei der blockbasierten Bildcodierung erreicht.

Desweiteren wird eine erhebliche Reduktion der benötigten Übertragungsrate der Einträge des Codebuchs erreicht.

In Fig. 5 ist u. a. ein erster Rechner R1 dargestellt, mit dem das erfindungsgemäße Verfahren durchgeführt wird.

Ferner ist in Fig. 5 eine Kamera KA dargestellt, mit der eine Folge von Bildern aufgenommen wird, welche in dem ersten Rechner R1 zu einer Folge von digitalen Bildern B umgewandelt wird. Die digitalen Bilder B werden in einem Speicher SP1 des ersten Rechners R1 gespeichert. Ferner ist in dieser Anordnung für den ersten Rechner R1 ein Bildschirm B1 vorgesehen.

Bei einer Übertragung des digitalisierten Bildes B wird vor der Übertragung des digitalisierten Bildes B das Verfahren auf die einzelnen Bildsegmente BS1, BS2 angewendet. Die daraus resultierenden Spektralkoeffizienten werden über einen Kanal K zu einem zweiten Rechner R2 übertragen, wo sie in einem zweiten Speicher SP2 gespeichert werden. Nach Durchführung der inversen Bildtransformationscodierung und der inversen konformen Abbildung wird das digitalisierte Bild B wieder in dem zweiten Rechner R2 rekonstruiert und einem Benutzer auf dem zweiten Bildschirm B2 dargestellt.

Im Rahmen dieses Dokuments wurden folgende Veröffentlichungen zitiert:

[1] T. Kim, New Finite State Vector Quantisers for Images, Proceedings of ICASSP, S. 1180 - 1183, 1988

[2] R. F. Chang und W. T. Chen, Image Coding using Variable-Side-Match Finite-State Vector Quantisation, IEEE Transactions Image Processing, Vol. 2, S. 104 - 108, Januar 1993

[3] N. Nasrabadi und R. King, Image Coding Using Vector Quantization: A Review, IEEE Transactions on Communications, Vol. 36, No. 8, August 1988

[4] ZENG B ET AL: 'INTERPOLATIVE BTC IMAGE CODING WITH VECTOR QUANTIZATION' IEEE TRANSACTIONS ON COMMUNICATIONS, Bd. 41, Nr. 10, 1.Oktober 1993, Seiten 1436-1438, XP000398019

[5] CONSTANTINESCU C ET AL: 'IMPROVED TECHNIQUES FOR SINGLE-PASS ADAPTIVE VECTOR QUANTIZATION' PROCEEDINGS OF THE IEEE, Bd, 82, Nr. 6, 1.Juni 1994, Seiten 933-939, XP000438342

**Patentansprüche**

1. Verfahren zur Vektorquantisierung und zur inversen Vektorquantisierung eines digitalisierten Bildes (B),

   - bei dem mindestens ein Teil von Bildpunkten (BP) des digitalisierten Bildes (B) in mindestens einen zu quantisierenden Bildbereich (QB) und in mindestens einen nicht zu quantisierenden Bildbereich (NQB) gruppiert (301) wird,
   - bei dem Bildinformation des zu quantisierenden Bildbereichs (QB) auf einen Eintrag in einem Codebuch abgebildet (302) wird, mit dem die jeweilige Bildinformation des zu quantisierenden Bildbereichs (QB) näherungsweise beschrieben wird,
   - bei dem der jeweilige Eintrag des Codebuchs dem zu quantisierenden Bildbereich (QB) zugeordnet (303) wird,
   - bei dem der Eintrag auf eine approximierte Bildinformation, die in dem Codebuch enthalten ist, abgebildet (304) wird,
   - bei dem aus der approximierten Bildinformation der quantisierte Bildbereich (QB) rekonstruiert (305) wird;

   **dadurch gekennzeichnet , daß** der Bereich (NQB) des Bildes, der nicht quantisiert wurde, durch Interpolation und/oder durch Extrapolation von Bildinformation des quantisierten Bildbereichs (QB) rekonstruiert (306) wird.

2. Verfahren nach Anspruch 1,
   bei dem der zu quantisierende Bildbereich (QB) rechteckförmig ausgestaltet ist.

3. Verfahren nach Anspruch 1 oder 2,
   bei dem der nicht zu quantisierende Bildbereich (NQB) unter Verwendung approximierter Bildinformation direkt benachbarter Bildbereiche rekonstruiert wird.

4. Verfahren nach einem der Ansprüche 1 bis 3,
   bei dem als Bildinformation Luminanzwerte und/oder Chrominanzwerte verwendet werden, die den Bildpunkten (BP) des Bildes zugeordnet sind.

5. Verfahren nach einem der Ansprüche 1 bis 4,
   bei dem die Größe des Bildbereichs adaptiv ausgestaltet ist.

6. Verfahren nach Anspruch 5,
   bei dem die Größe des Bildbereichs gewählt wird, abhängig von der Semantik des zu quantisierenden Bildes.

7. Verfahren nach Anspruch 6,
   bei dem die Semantik des zu quantisierenden Bildes durch ein Maß repräsentiert wird, mit dem die Änderung der Bildinformation innerhalb des Bildes beschrieben wird.

8. Anordnung zur Vektorquantisierung und zur inversen Vektorquantisierung eines digitalisierten Bildes (B),
   mit mindestens einer Prozessoreinheit (R1, R2), die derart eingerichtet ist, daß

   - mindestens ein Teil von Bildpunkten (BP) des digitalisierten Bildes (B) in mindestens einen zu quantisierenden Bildbereich (QB) und in mindestens einen nicht zu quantisierenden Bildbereich (NQB) gruppiert (301) wird,
   - Bildinformation des zu quantisierenden Bildbereichs (QB) auf einen Eintrag in einem Codebuch abgebildet (302) wird, mit dem die jeweilige Bildinformation des zu quantisierenden Bildbereichs (QB) näherungsweise beschrieben wird,

- der jeweilige Eintrag des Codebuchs dem zu quantisierenden Bildbereich (QB) zugeordnet (303) wird,
- der Eintrag auf eine approximierte Bildinformation, die in dem Codebuch enthalten ist, abgebildet (304) wird,
- aus der approximierten Bildinformation der quantisierte Bildbereich (QB) rekonstruiert (305) wird;

**dadurch gekennzeichnet, daß** der Bereich (NQB) des Bildes, der nicht quantisiert wurde, durch Interpolation und/oder durch Extrapolation von Bildinformation des quantisierten Bildbereichs (QB) rekonstruiert (306) wird.

9. Anordnung nach Anspruch 8,
bei der die Prozessoreinheit (R1, R2) derart eingerichtet ist, daß der zu quantisierende Bildbereich (QB) rechteckförmig ausgestaltet ist.

10. Anordnung nach Anspruch 8 oder 9,
bei der die Prozessoreinheit (R1, R2) derart eingerichtet ist, daß der nicht zu quantisierende Bildbereich (QB) unter Verwendung approximierter Bildinformation direkt benachbarter Bildbereiche rekonstruiert wird.

11. Anordnung nach einem der Ansprüche 8 bis 10,
bei der die Prozessoreinheit (R1, R2) derart eingerichtet ist, daß als Bildinformation Luminanzwerte und/oder Chrominanzwerte verwendet werden, die den Bildpunkten des Bildes zugeordnet sind.

12. Anordnung nach einem der Ansprüche 8 bis 11,
bei der die Prozessoreinheit (R1, R2) derart eingerichtet ist, daß die Größe des Bildbereichs adaptiv ausgestaltet ist.

13. Anordnung nach Anspruch 12,
bei der die Prozessoreinheit (R1, R2) derart eingerichtet ist, daß die Größe des Bildbereichs gewählt wird, abhängig von der Semantik des zu quantisierenden Bildes.

14. Anordnung nach Anspruch 13,
bei der die Prozessoreinheit (R1, R2) derart eingerichtet ist, daß die Semantik des zu quantisierenden Bildes durch ein Maß repräsentiert wird, mit dem die Änderung der Bildinformation innerhalb des Bildes beschrieben wird.

**Claims**

1. Method for vector quantization and for inverse vector quantization of a digitized picture (B),

   - in which at least a portion of pixels (BP) of the digitized image (B) are grouped (301) into at least one picture region (QB) to be quantized and into at least one picture region (NQB) not to be quantized,
   - in which picture information of the picture region (QB) to be quantized is mapped (302) onto an entry in a code book, with the aid of which the respective picture information of the picture region (QB) to be quantized is described approximately,
   - in which the respective entry of the code book is assigned (303) to the picture region (QB) to be quantized,
   - in which the entry is mapped (304) onto approximated picture information which is contained in the code book,
   - in which the quantized picture region (QB) is reconstructed (305) from the approximated picture information;

   **characterized in that** the region (NQB) of the picture which was not quantized is reconstructed by interpolation and/or by extrapolation of picture information of the quantized picture region (QB).

2. Method according to Claim 1, in which the picture region (QB) to be quantized is of rectangular configuration.

3. Method according to Claim 1 or 2, in which the picture region (NQB) not to be quantized is reconstructed by using approximated picture information of directly neighbouring picture regions.

4. Method according to one of Claims 1 to 3, in which use is made, as picture information, of luminance values and/or chrominance values which are assigned to the pixels (BP) of the picture.

**5.** Method according to one of Claims 1 to 4, in which the size of the picture region is adaptively configured.

**6.** Method according to Claim 5, in which the size of the picture region is selected as a function of the semantics of the picture to be quantized.

**7.** Method according to Claim 6, in which the semantics of the picture to be quantized is represented by a measure with the aid of which the change in the picture information within the picture is described.

**8.** Arrangement for vector quantization and for inverse vector quantization of a digitized picture (B), having at least one processor unit (R1, R2) which is set up in such a way that:

- at least a portion of pixels (BP) of the digitized image (B) are grouped (301) into at least one picture region (QB) to be quantized and into at least one picture region (NQB) not to be quantized,
- picture information of the picture region (QB) to be quantized is mapped (302) onto an entry in a code book, with the aid of which the respective picture information of the picture region (QB) to be quantized is described approximately,
- the respective entry of the code book is assigned (303) to the picture region (QB) to be quantized,
- the entry is mapped (304) onto approximated picture information which is contained in the code book,
- the quantized picture region (QB) is reconstructed (305) from the approximated picture information;

**characterized in that** the region (NQB) of the picture which was not quantized is reconstructed by interpolation and/or by extrapolation of picture information of the quantized picture region (QB).

**9.** Arrangement according to Claim 8, in which the processor unit (R1, R2) is set up in such a way that the picture region (QB) to be quantized is of rectangular configuration.

**10.** Arrangement according to Claim 8 or 9, in which the processor unit (R1, R2) is set up in such a way that the picture region (QB) [sic] not to be quantized is reconstructed by using approximated picture information of directly neighbouring picture regions.

**11.** Arrangement according to one of Claims 8 to 10, in which the processor unit (R1, R2) is set up in such a way that use is made, as picture information, of luminance values and/or chrominance values which are assigned to the pixels of the picture.

**12.** Arrangement according to one of Claims 8 to 11, in which the processor unit (R1, R2) is set up in such a way that the size of the picture region is adaptively configured.

**13.** Arrangement according to Claim 12, in which the processor unit (R1, R2) is set up in such a way that the size of the picture region is selected as a function of the semantics of the picture to be quantized.

**14.** Arrangement according to Claim 13, in which the processor unit (R1, R2) is set up in such a way that the semantics of the picture to be quantized is represented by a measure with the aid of which the change in the picture information within the picture is described.

**Revendications**

**1.** Procédé de quantification vectorielle et de quantification vectorielle inverse d'une image numérisée (B),

- dans lequel au moins une partie de points d'image (BP) de l'image numérisée (B) est regroupée en au moins une zone d'image à quantifier (QB) et en au moins une zone d'image (NQB) non à quantifier (301),
- dans lequel des informations d'image de la zone d'image à quantifier (QB) sont projetées sur une entrée d'un livre de codes (302), avec lequel les informations d'image respectives de la zone d'image à quantifier (QB) sont décrites de manière approximative,
- dans lequel l'entrée respective du livre de codes est affectée à la zone d'image à quantifier (QB) (303),
- dans lequel l'entrée est projetée (304) dans des informations d'image approximatives, qui sont contenues dans le livre de codes,
- dans lequel, à partir d'informations d'image approximatives, on reconstruit (305) la zone d'image à quantifier (QB),

**caractérisé en ce que** la zone (NQB) de l'image, qui n'a pas été quantifiée, est reconstruite (306) par interpolation et/ou par extrapolation d'informations d'image de la zone d'image quantifiée (QB).

2. Procédé selon la revendication 1, dans lequel la zone d'image à quantifier (QB) se présente sous une forme rectangulaire.

3. Procédé selon la revendication 1 ou 2, dans lequel la zone d'image non à quantifier (NQB) est reconstruite en utilisant des informations d'image approximatives de zones d'image directement adjacentes.

4. Procédé selon l'une quelconque des revendications 1 à 3, dans lequel on utilise comme informations d'image des valeurs de luminance et/ou des valeurs de chrominance, qui sont affectées aux points d'image (BP) de l'image.

5. Procédé selon l'une quelconque des revendications 1 à 4, dans lequel la grandeur de la zone d'image est conformée de manière adaptative.

6. Procédé selon la revendication 5, dans lequel la grandeur de la zone d'image est choisie en fonction de la sémantique de l'image à quantifier.

7. Procédé selon la revendication 6, dans lequel la sémantique de l'image à quantifier est représentée par une mesure qui permet de décrire la modification des informations d'image au sein de l'image.

8. Aménagement pour la quantification vectorielle et pour la quantification vectorielle inverse d'une image numérisée (B), comprenant au moins une unité de processeur (R1, R2) qui est aménagée de sorte :

    - qu'au moins une partie des points d'image (BP) de l'image numérisée (B) soit regroupée en au moins une zone d'image à quantifier (QB) et en au moins une zone d'image non à quantifier (NQB) (301),
    - que des informations d'image de la zone d'image à quantifier (QB) soient projetées sur une entrée d'un livre de codes (302), avec lequel les informations d'image respectives de la zone d'image à quantifier (QB) sont décrites de manière approximative,
    - que l'entrée respective du livre de code soit affectée à la zone d'image à quantifier (QB) (303),
    - que l'entrée soit projetée sur des informations d'image approximatives, qui sont contenues dans le livre de codes (304),
    - que la zone d'image à quantifier (QB) (305) soit reconstruite à partir des informations d'image approximatives,

    **caractérisé en ce que** la zone (NQB) de l'image, qui n'a pas été quantifiée, est reconstruite par interpolation et/ou extrapolation d'informations d'image de la zone d'image quantifiée (QB) (306).

9. Aménagement selon la revendication 8, dans lequel l'unité de processeur (R1, R2) est aménagée de sorte que la zone d'image à quantifier (QB) se présente sous une forme rectangulaire.

10. Aménagement selon la revendication 8 ou 9, dans lequel l'unité de processeur (R1, R2) est aménagée de sorte que la zone d'image non à quantifier (NQB) soit reconstruite en utilisant des informations d'image approximatives de zones d'image directement adjacentes.

11. Aménagement selon l'une quelconque des revendications 8 à 10, dans lequel l'unité de processeur (R1, R2) est aménagée de manière à utiliser comme informations d'image des valeurs de luminance et/ou des valeurs de chrominance, qui sont affectées aux points d'image de l'image.

12. Aménagement selon l'une quelconque des revendications 8 à 11, dans lequel l'unité de processeur (R1, R2) est aménagée de sorte que la grandeur de la zone d'image se présente sous une forme adaptative.

13. Aménagement selon la revendication 12, dans lequel l'unité de processeur (R1, R2) est aménagée de sorte que la grandeur de la zone d'image soit choisie en fonction de la sémantique de l'image à quantifier.

14. Aménagement selon la revendication 13, dans lequel l'unité de processeur (R1, R2) est aménagée de sorte que la sémantique de l'image à quantifier soit représentée par une mesure qui permet de décrire la variation des informations d'image au sein de l'image.

## FIG 1

## FIG 2

## FIG 4

## FIG 3

| 301 | Gruppierung von Bildpunkten eines Bildes in mindestens einen zu quantisierenden Bildbereich |

| 302 | Abbildung eines Bildbereichsvektors auf einen Quantisierungsvektor |

| 303 | Zuordnung des Eintrags des Quantisierungsvektor zu dem Bildbereich |

| 304 | Abbildung des Eintrags des Codebuchs auf eine approximierte Bildinformation |

| 305 | Rekonstruktion des quantisierten Bildbereichs mit der approxomierten Bildinformation |

| 306 | Rekonstruktion des nicht quantisierten Bildbereichs durch Interpolation und/oder Extrapolation der approximierten Bildinformation |

# FIG 5